# EUROPEAN PATENT APPLICATION

(11) **EP 2 781 729 A1**
(43) Date of publication of application: **24.09.2014**
(21) Application number: 12850706.8
(22) Date of filing: 14.11.2012
(51) Int. Cl.: F02M 25/07, F01P 3/20, F02B 29/04, F02B 37/00, F02M 35/10

(54) **EXHAUST GAS RECIRCULATION SYSTEM**

(30) Priority: 18.11.2011 JP 2011252394
(71) Applicant: Calsonic Kansei Corporation, Saitama-shi, Saitama 331-8501 (JP)
(72) Inventor: IWASAKI, Mitsuru, Saitama-shi Saitama 331-8501 (JP)
(74) Representative: Grünecker, Kinkeldey, Stockmair & Schwanhäusser
(86) International application number: PCT/JP2012/079466
(87) International publication number: WO 2013/073553

(57) **Abstract**

An exhaust gas recirculation system includes a turbo charger having a compressor wheel and a turbine wheel, a high-pressure intake passage provided between the compressor wheel and an intake port of an internal combustion engine, a charge air cooler provided on the high-pressure intake passage to cool intake gas, a high-pressure exhaust passage provided between an exhaust port of the internal combustion engine and the turbine wheel, an EGR passage branched from the high-pressure exhaust passage and connected to the high-pressure intake passage, and an EGR cooler for cooling recirculated exhaust gas flowing through the EGR passage by coolant flowing through a coolant recirculation passage of the internal combustion engine. A downstream end of the EGR passage is connected to the high-pressure intake passage at an upstream of the charge air cooler. According to the exhaust gas recirculation system, intake gas mixed with recirculated exhaust gas can be supplied to the engine at desired temperature, so that fuel consumption of the engine can be improved.

## Description

### TECHNICAL FIELD

The present invention relates to an exhaust gas recirculation system for recirculating a portion of exhaust gas to an intake passage of an internal combustion engine.

### BACKGROUND ART

With respect to an internal combustion engine provided with a turbo charger, proposed is an Exhaust Gas Recirculation System for reducing combustion temperature by actuating the turbo charger by use of exhaust gas and recirculating a portion of the exhaust gas to an intake passage to restrict generation of NOx.

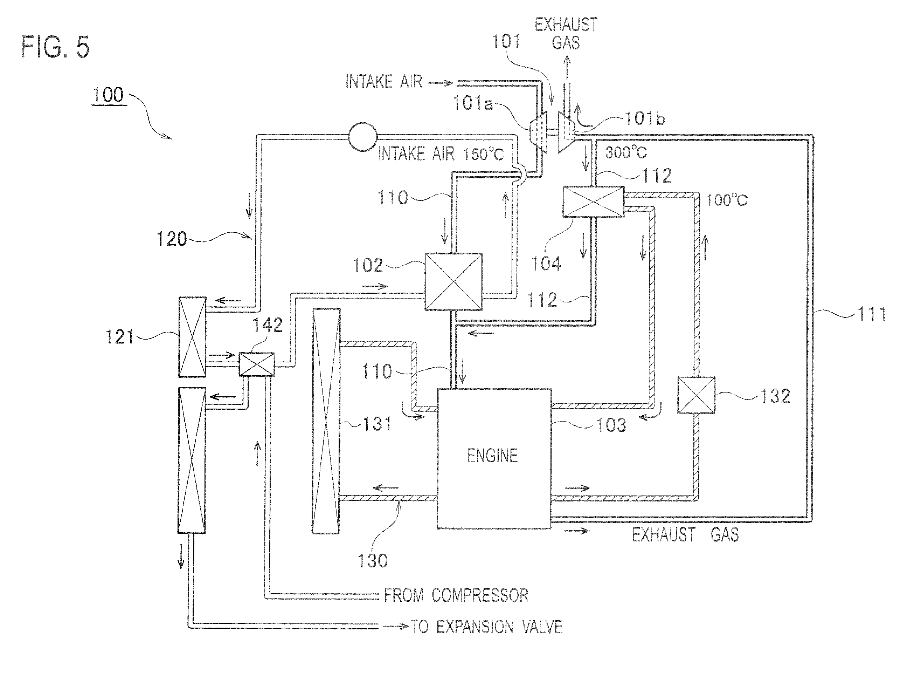

The Exhaust Gas Recirculation System is also called as an EGR system, and the EGR system includes an LPL [Low Pressure Loop] type for returning exhaust gas to an upstream of the turbo charger (see Patent Document 1 listed below) and an HPL [High Pressure Loop] type for returning exhaust gas to a downstream of the turbo charger (see Patent Document 2 listed below). In the LPL-type EGR system, control responses of the EGR system are not good due to a long path from a recirculated position of the exhaust gas to combustion chambers, so that subtle controls cannot be done. On the other hand, in the HPL-type EGR system, the above problems don't be brought and high efficiency of fuel consumption can be brought. An example of an HPL-type EGR system is shown in Fig. 5.

As shown in Fig. 5, the EGR system 100 includes a turbo charger 101, a high-pressure intake passage 110, a charge air cooler 102, a high-pressure exhaust passage 111, an EGR passage 112, and an EGR cooler 104. The turbo charger 101 has a compressor wheel 101a for compressing intake gas, and a turbine wheel 101b coaxially coupled with the compressor wheel 101a. When the turbine wheel 101b is rotated by exhaust gas, the compressor wheel 101a is also rotated. The intake gas is compressed (super-charged) due to these rotations of the compressor wheel 101a.

The high-pressure intake passage 110 is provided between the compressor wheel 101a and an intake port(s) of an internal combustion engine (hereinafter, merely called as the engine) 103. The charge air cooler 102 is provided on the high-pressure intake passage 110 to cool the intake gas. The high-pressure exhaust passage 111 is provided between an exhaust port(s) of the engine 103 and the turbine wheel 101b. The EGR passage 112 is branched from the high-pressure exhaust passage 111, and connected to the high-pressure intake passage 110 at a downstream of the charge air cooler 102. The EGR cooler 104 is provided on the EGR passage 112 to cool recirculated exhaust gas (EGR gas) flowing through the EGR passage 112.

In the charge air cooler 102, heat is exchanged between the exhaust gas and coolant flowing through a coolant recirculation sub-passage 120, and thereby the exhaust gas is cooled. The coolant cooled in a sub-radiator 121 is recirculated along the coolant recirculation sub-passage 120 to flow sequentially through a water-cooled condenser 142 of an air-conditioner and the charge air cooler 102, and then returned to the sub-radiator 121.

In the EGR cooler 104, heat is exchanged between the EGR gas and coolant flowing through a coolant recirculation passage 130, and thereby the EGR gas is cooled. The coolant cooled in a radiator 131 is recirculated along the coolant recirculation passage 130 to flow sequentially through the engine 103, a heater core 132 of the air-conditioner, the EGR cooler 104 and the engine 103 again, and then returned to the radiator 131.

The intake gas is compressed by the compressor wheel 101a, and thereby become high-temperature (e.g. 150°C) and high-pressure intake gas. This high-temperature and high-pressure intake gas is cooled by the charge air cooler 102. On the other hand, high-temperature (e.g. 300°C) and high-pressure exhaust gas from the engine 103 is supplied to the turbine wheel 101b through the high-pressure exhaust passage 111. Here, a portion of the high-temperature and high-pressure exhaust gas flows to the EGR passage 112 as the EGR gas. The EGR gas flowing through the EGR passage 112 is cooled by the EGR cooler 104, and then recirculated to the high-pressure intake passage 110 at a downstream of the charge air cooler 102. The intake gas mixed with the EGR gas is supplied to the engine 103, and thereby combustion temperature in the engine 103 is reduced.

### Prior Art Document

### Patent Documents

Patent Document 1: Japanese Patent Application Laid-Open No. 2008-64399
Patent Document 2: Japanese Patent Application Laid-Open No. 2008-38891

### SUMMARY OF INVENTION

However, in the above-explained EGR system 100, there are following problems. Fuel consumption of the engine 103 depends on temperature of the intake gas (charge efficiency, oxygen density). Therefore, it is preferable that the intake gas has desired intake temperature (is in a desired intake temperature range: e.g. approximately 50°C) in view of fuel consumption. The charge air cooler 102 cools the intake gas to temperature in the above intake temperature range (e.g. 55°C). However, the EGR cooler 104 cools the exhaust gas (e.g. almost 300°C) by using the coolant flowing through the coolant recirculation passage 130 after passing through the heater core 132 (e.g. 100°C). Therefore, the EGR gas after passing through the EGR cooler 104 generally has temperature higher than 100°C. Since the intake gas is mixed with the EGR gas higher than 100°C, the intake gas to be charged into the engine 103 has high temperature 80°C to 100°C and thereby impedes improvements of fuel consumption.

Here, considered can be a configuration in which the EGR cooler 104 is provided not on the coolant recirculation passage 130 but on the coolant recirculation sub-passage 120 to cool the exhaust gas by the coolant flowing through the coolant recirculation sub-passage 120. However, the size of the sub-radiator 121 must become large in order to cool the exhaust gas from almost 300°C to approximately 50°C, so that this configuration is not practicable.

Therefore, an object of the present invention is to provide an EGR system that can improve fuel consumption by supplying intake gas mixed with EGR gas to an internal combustion engine at desired intake temperature.

An aspect of the present invention provides an exhaust gas recirculation system comprising: a turbo charger having a compressor wheel and a turbine wheel; a high-pressure intake passage provided between the compressor wheel and an intake port of an internal combustion engine; a charge air cooler provided on the high-pressure intake passage to cool intake gas; a high-pressure exhaust passage provided between an exhaust port of the internal combustion engine and the turbine wheel; an EGR passage branched from the high-pressure exhaust passage and connected to the high-pressure intake passage; and an EGR cooler for cooling recirculated exhaust gas flowing through the EGR passage by coolant flowing through a coolant recirculation passage of the internal combustion engine, wherein a downstream end of the EGR passage is connected to the high-pressure intake passage at an upstream of the charge air cooler.

According to the aspect, a portion of high-temperature exhaust gas is cooled, in the EGR cooler, by coolant flowing through the coolant recirculation passage of the internal combustion engine as the recirculated exhaust gas (EGR gas). The cooled EGR gas is mixed with intake gas, and then the intake gas mixed with the EGR gas is cooled in the charge air cooler. Here, the EGR cooler cools the EGR gas by coolant flowing through the coolant recirculation passage, so that it doesn't have cooling capability for cooling the EGR gas to desired intake temperature. However, the charge air cooler that has cooling capability for cooling the intake gas to the desired intake temperature is provided. Therefore, the intake gas mixed with the EGR gas can be supplied to the internal combustion engine at the desired intake temperature, so that fuel consumption of the internal combustion engine can be improved.

Here, it is preferable that the charge air cooler is configured to cool intake gas by coolant flowing through a coolant recirculation sub-passage other than the coolant recirculation passage.

In addition, it is preferable that the exhaust gas recirculation system further comprises a charge air pre-cooler provided on the high-pressure intake passage, and the charge air pre-cooler is disposed at an upstream of the charge air cooler.

Here, it is preferable that the charge air pre-cooler is configured to cool intake gas by coolant flowing through the coolant recirculation passage.

In addition, it is preferable that the downstream end of the EGR passage is connected to the high-pressure intake passage at a downstream of the charge air pre-cooler.

In addition, it is preferable that the coolant recirculation passage is configured to include a flow path for recirculating coolant sequentially through a radiator, the internal combustion engine, the EGR cooler and the internal combustion engine again, and a flow path for recirculating coolant sequentially through the radiator, the charge air pre-cooler and the internal combustion engine.

Alternatively, it is preferable that the coolant recirculation passage is configured to recirculate coolant sequentially through a radiator, the internal combustion engine, the EGR cooler, the charge air pre-cooler and the internal combustion engine again.

### BRIEF DESCRIPTION OF DRAWINGS

[Fig. 1] It is a schematic configuration diagram of an EGR system according to a first embodiment of the present invention.
[Fig. 2] It is a schematic configuration diagram of an EGR system according to a second embodiment of the present invention.
[Fig. 3] It is a schematic configuration diagram of an EGR system according to a third embodiment of the present invention.
[Fig. 4] It is a schematic configuration diagram of an EGR system according to a fourth embodiment of the present invention.
[Fig. 5] It is a schematic configuration diagram of a prior-art EGR system.

### DESCRIPTION OF EMBODIMENTS

Hereinafter, embodiments will be explained with reference to the drawings.

### (First Embodiment)

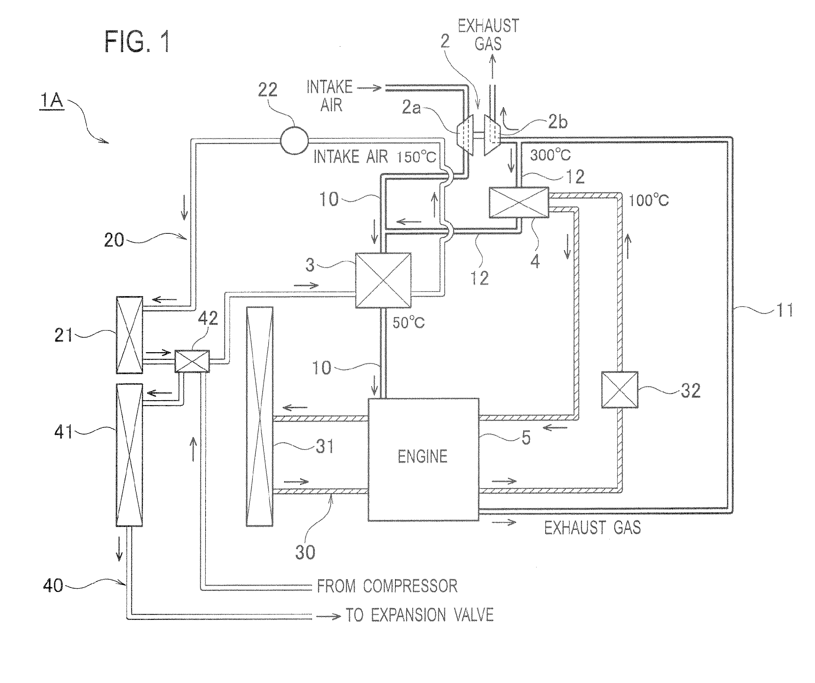

As shown in Fig. 1, an exhaust gas recirculation (EGR) system 1A according to the present embodiment includes a turbo charger 2, a high-pressure intake passage 10, a charge air cooler 3, a high-pressure exhaust passage 11, an EGR passage 12, and an EGR cooler 4. The turbo charger 2 has a compressor wheel 2a for compressing intake gas, and a turbine wheel 2b coaxially coupled with the compressor wheel 2a. When the turbine wheel 2b is rotated by exhaust gas, the compressor wheel 2a is also rotated. The intake gas is compressed (super-charged) due to these rotations of the compressor wheel 2a.

The high-pressure intake passage 10 is provided between the compressor wheel 2a and an intake port(s) of an internal combustion engine (hereinafter, merely called as the engine) 5. The charge air cooler 3 is called also as an intercooler, and provided on the high-pressure intake passage 10 to cool the intake gas. The high-pressure exhaust passage 11 is provided between an exhaust port(s) of the engine 5 and the turbine wheel 2b. The EGR passage 12 is branched from the high-pressure exhaust passage 11, and connected to the high-pressure intake passage 10 at an upstream of the charge air cooler 3. The EGR cooler 4 is provided on the EGR passage 12 to cool recirculated exhaust gas (EGR gas).

The charge air cooler 3 cools the intake gas by coolant flowing through a coolant recirculation sub-passage 20. The charge air cooler 3 has cooling capability for cooling the intake gas to desired intake temperature (into an intake temperature range: e.g. approximately 50°C). The coolant cooled in a sub-radiator 21 is recirculated along the coolant recirculation sub-passage 20 by an electrical pump 22 to flow sequentially through a water-cooled condenser 42 of an air-conditioner and the charge air cooler 3, and then returned to the sub-radiator 21. In the sub-radiator 21, heat is exchanged between air and the coolant, and thereby the coolant is cooled.

The water-cooled condenser 42 is provided in a refrigeration cycle 40 (partially shown) of the air-conditioner. In the refrigeration cycle 40, an air-cooled condenser 41 is also provided at a downstream of the water-cooled condenser 42. In the air-cooled condenser 41, heat is exchanged between air and refrigerant flowing through the air-cooled condenser 41, and thereby the refrigerant is cooled. In the water-cooled condenser 42, heat is exchanged between the refrigerant and the coolant flowing through the coolant recirculation sub-passage 20, and thereby the refrigerant is cooled.

In the EGR cooler 4, heat is exchanged between the EGR gas and coolant flowing through a coolant recirculation passage 30, and thereby the EGR gas is cooled. The coolant cooled in a radiator 31 is recirculated along the coolant recirculation passage 30 to flow sequentially through the engine 5, a heater core 32 of the air-conditioner, the EGR cooler 4 and the engine 5 again, and then returned to the radiator 31. In addition, the coolant recirculation passage 30 can recirculate the coolant while bypassing the radiator 31. In this case, the coolant is recirculated through the engine 5, the heater core 32, and the EGR cooler 4. Therefore, the coolant can be recirculated through the heater core 32 and the EGR cooler 4 when the coolant is not flown through the radiator 31 in order to adjust temperature of the coolant.

Note that the coolant recirculation passage 30 is shown with hatching so as to be easily recognized (similarly also in after-explained embodiments). In the radiator 31, heat is exchanged between air and the coolant flowing through the coolant recirculation passage 30, and thereby the coolant is cooled. The radiator 31 is disposed in an engine compartment together with the sub-radiator 21 and the air-cooled condenser 41. For example, the radiator 31, the sub-radiator 21 and the air-cooled condenser 41 are parallelly integrated, and then vertically mounted at a front section in the engine compartment.

The intake gas is compressed by the compressor wheel 2a, and thereby become high-temperature (e.g. 150°C) and high-pressure intake gas. This high-temperature and high-pressure intake gas is supplied to the charge air cooler 3. On the other hand, high-temperature (e.g. 300°C) and high-pressure exhaust gas from the engine 5 is supplied to the turbine wheel 2b through the high-pressure exhaust passage 11. Here, a portion of the high-temperature and high-pressure exhaust gas flows to the EGR passage 12 as the EGR gas. The EGR gas flowing through the EGR passage 12 is cooled by the EGR cooler 4. The cooled EGR gas is recirculated to the high-pressure intake passage 10 at an upstream of the charge air cooler 3. The intake gas mixed with the EGR gas is cooled in the charge air cooler 3 by the coolant flowing through the coolant recirculation sub-passage 20.

Here, the EGR cooler 4 doesn't have cooling capability for cooling the EGR gas to the above-mentioned desired temperature (into the desired temperature range: e.g. approximately 50°C) because it cools the EGR gas by using the coolant recirculation passage 30, but can cool the EGR gas to a certain level of temperature (e.g. 100 °C). On the other hand, as explained above, the charge air cooler 3 has cooling capability for cooling the intake gas to the above-mentioned desired temperature. Therefore, the charge air cooler 3 can cool the intake gas mixed with the EGR gas to the above intake temperature, and thereby fuel consumption of the engine 5 can be improved.

As explained above, the intake gas mixed with the EGR gas can be supplied to the engine 5 at the desired intake temperature (e.g. approximately 50°C) because the EGR passage 12 is connected to the high-pressure intake passage 10 at an upstream of the charge air cooler 3, so that fuel consumption of the engine 5 can be improved.

### (Second Embodiment)

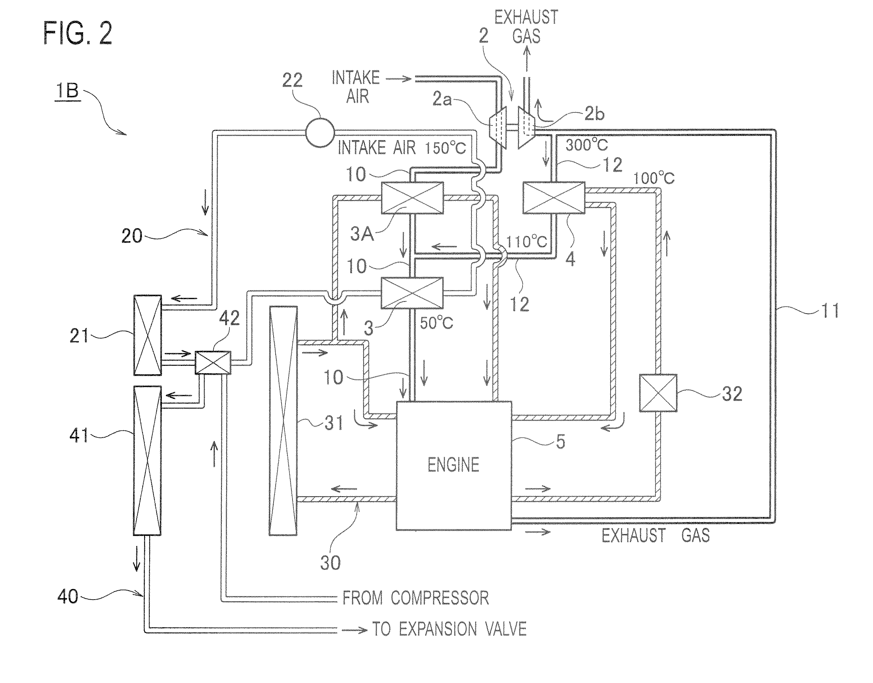

As shown in Fig. 2, an EGR system 1B according to the present embodiment further includes a charge air pre-cooler 3A in addition to the configurations of the EGR system 1A in the above first embodiment. The charge air pre-cooler 3A is disposed at an upstream from the charge air cooler 3 on the high-pressure intake passage 10. The charge air pre-cooler 3A cools the intake gas by the coolant flowing through the coolant recirculation passage 30.

In addition, configurations of the coolant recirculation passage 30 in the present embodiment are different from those in the above first embodiment. The coolant cooled in the radiator 31 is recirculated along the coolant recirculation passage 30 to flow sequentially through the engine 5, the heater core 32, the EGR cooler 4 and the engine 5 again, and then returned to the radiator 31 (a recirculation path identical to a recirculation path of the above first embodiment). Further, the coolant recirculation passage 30 further includes a recirculation path for flowing the coolant cooled in the radiator 31 sequentially through the charge air pre-cooler 3A and the engine 5 and then returning it to the radiator 31. In addition, similarly to the above first embodiment, the coolant recirculation passage 30 can recirculate the coolant while bypassing the radiator 31. In this case, the coolant is recirculated through the engine 5, the heater core 32 and the EGR cooler 4, and also recirculated through the engine 5 and the charge air pre-cooler 3A.

In the charge air pre-cooler 3A, the intake gas is cooled by the coolant right after being cooled in the radiator 31. A downstream end of the EGR passage 12 is connected to the high-pressure intake passage 10 between the charge air pre-cooler 3A and the charge air cooler 3. Since other configurations are equivalent to configurations in the above first embodiment, their redundant explanations are omitted while assigning identical reference numbers with the equivalent configurations.

According also to the present embodiment, similarly to the above first embodiment, the intake gas mixed with the EGR gas can be supplied to the engine 5 at the desired intake temperature (e.g. approximately 50°C), so that fuel consumption of the engine 5 can be improved. In addition, in the present embodiment, the intake gas is cooled by the coolant flowing through the coolant recirculation passage 30 also in the charge air pre-cooler 3A. Therefore, the coolant recirculation passage 30 can be utilized effectively.

Further, since the charge air pre-cooler 3A is also provided in addition to the charge air cooler 3, cooling capability required for the charge air cooler 3 can be made lower than that for the configurations of the above first embodiment. Further, since the charge air pre-cooler 3A is also provided in addition to the charge air cooler 3, the charge air cooler 3 can be downsized, and the EGR gas is recirculated to a position between the charge air cooler 3 and the charge air pre-cooler 3A. Therefore, flow resistance of the EGR gas in the charge air cooler 3 is made lower than that in the above first embodiment, so that a recirculated amount of the EGR gas can be increased. Further, a flow distance of the EGR gas on the intake passage (a distance from a recirculated position of the EGR gas to the intake port(s) of the engine 5) can be made shorter than that in the configurations of the above first embodiment, so that control responses of the EGR system can be improved.

Furthermore, in the charge air pre-cooler 3A, the intake gas is cooled by the coolant right after being cooled in the radiator 31. Therefore, the intake gas can be cooled lower than by the configurations of the above first embodiment, so that the cooling capability required for the charge air cooler 3 can be made degraded further.

### (Third Embodiment)

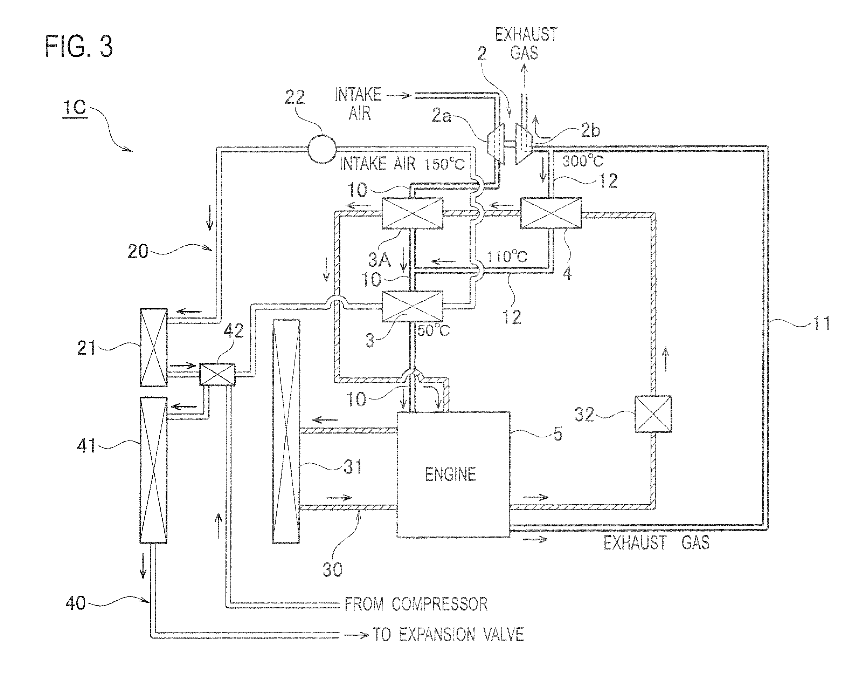

As shown in Fig. 3, configurations of the coolant recirculation passage 30 in an EGR system 1C according to the present embodiment are different from those in the above second embodiment. Although the coolant recirculation passage 30 in the above second embodiment includes two recirculation paths, the coolant recirculation passage 30 in the present embodiment includes a single recirculation path.

The coolant cooled in the radiator 31 is recirculated along the coolant recirculation passage 30 to flow sequentially through the engine 5, the heater core 32, the EGR cooler 4, the charge air pre-cooler 3A and the engine 5 again, and then returned to the radiator 31. In addition, similarly to the above embodiments, the coolant recirculation passage 30 can recirculate the coolant while bypassing the radiator 31. In this case, the coolant is recirculated through the engine 5, the heater core 32, the EGR cooler 4 and the charge air pre-cooler 3A. Since other configurations are equivalent to configurations in the above second embodiment, their redundant explanations are omitted while assigning identical reference numbers with the equivalent configurations.

According also to the present embodiment, similarly to the above embodiments, the intake gas mixed with the EGR gas can be supplied to the engine 5 at the desired intake temperature (e.g. approximately 50°C), so that fuel consumption of the engine 5 can be improved. In addition, since the charge air pre-cooler 3A is also provided in addition to the charge air cooler 3, the charge air cooler 3 can be downsized, and the EGR gas is recirculated to a position between the charge air cooler 3 and the charge air pre-cooler 3A. Therefore, flow resistance of the EGR gas in the charge air cooler 3 is made lower than that in the above first embodiment, so that a recirculated amount of the EGR gas can be increased. A flow distance of the EGR gas on the intake passage (a distance from a recirculated position of the EGR gas to the intake port(s) of the engine 5) can be made shorter than that in the configurations of the above first embodiment, so that control responses of the EGR system can be improved.

Temperature of the coolant on the coolant recirculation passage 30 is almost 110°C at its highest level. The coolant cools the almost 300°C (sometimes more than 300°C) EGR gas in the EGR cooler 4, and then cools, in the charge air pre-cooler 3A, the almost 150°C (200°C at the highest) intake gas compressed in the turbo charger 2. Note that a recirculated amount of the EGR gas is smaller than a flow amount of the intake gas with which the EGR gas is to be made confluent, so that temperature increase of the coolant in the EGR cooler 4 due to heat-exchanging is relatively little. Therefore, temperature of the coolant flowing into the charge air pre-cooler 3A is lower than temperature flowing into the charge air pre-cooler 3A. As a result, a temperature difference between the exhaust gas and the coolant can be obtained surely in the EGR cooler 4, so that effective heat-exchanging performance in the EGR cooler 4 can be brought. Further, a temperature difference between the compressed intake gas and the coolant can be also obtained surely in the charge air pre-cooler 3A, so that effective heat-exchanging performance in the charge air pre-cooler 3A can be also brought.

### (Fourth Embodiment)

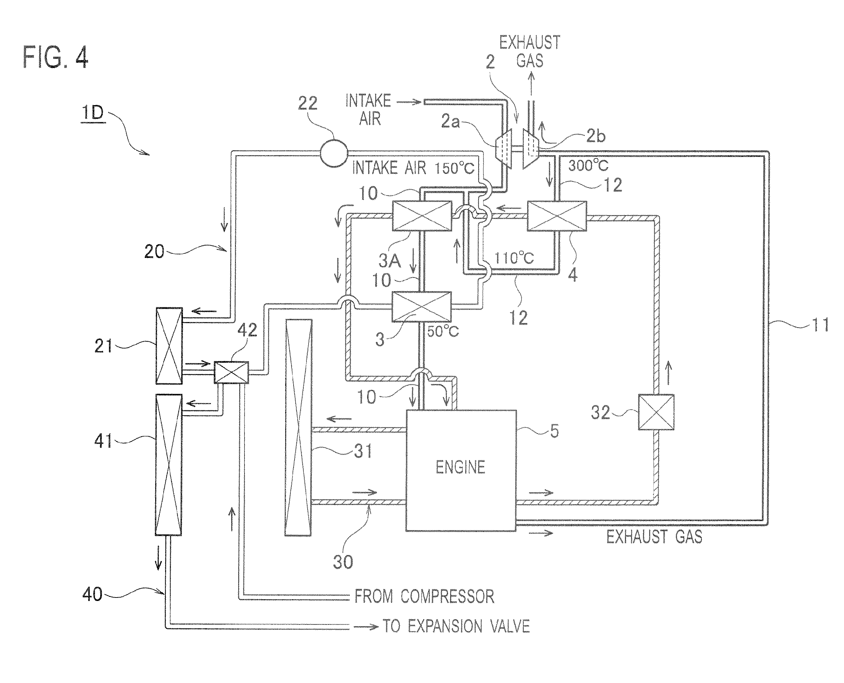

As shown in Fig. 4, a connection position of the EGR passage 12 to the high-pressure intake passage 10 in an EGR system 1D according to the present embodiment is different from that in the above third embodiment. In the present embodiment, a downstream end of the EGR passage 12 is connected to the high-pressure intake passage 10 at an upstream of the charge air pre-cooler 3A. Since other configurations are equivalent to configurations in the above third embodiment, their redundant explanations are omitted while assigning identical reference numbers with the equivalent configurations.

According also to the present embodiment, similarly to the above embodiments, the intake gas mixed with the EGR gas can be supplied to the engine 5 at the desired intake temperature (e.g. approximately 50°C), so that fuel consumption of the engine 5 can be improved. In addition, a flow distance of the EGR gas on the intake passage (a distance from a recirculated position of the EGR gas to the intake port(s) of the engine 5) in the HPL-type EGR system 1D according to the present embodiment can be made shorter than that in an LPL-type EGR system, so that control responses of the EGR system can be improved further than those of an LPL-type EGR system. Further, also in the present embodiment, similarly to the above third embodiment, a temperature difference between the exhaust gas and the coolant can be obtained surely in the EGR cooler 4 and a temperature difference between the compressed intake gas and the coolant can be also obtained surely in the charge air pre-cooler 3A, so that effective heat-exchanging performances in the EGR cooler 4 and the charge air pre-cooler 3A can be brought.

### (Other Embodiments)

In the above-explained embodiments, the engine 5 may be another type of engine such as a reciprocating engine. In addition, the engine 5 may be a gasoline engine or a diesel engine.

The charge air cooler 3 in the above-explained embodiments is a water-cooling type cooler that cools the intake gas by the coolant flowing through the coolant recirculation sub-passage 20. However, the charge air cooler 3 may be an air-cooling type cooler that cools the intake gas by air. In addition, the charge air pre-cooler 3A in the above-explained embodiments is also a water-cooling type cooler that cools the intake gas by the coolant flowing through the coolant recirculation sub-passage 20. However, the charge air pre-cooler 3A may be also an air-cooling type cooler. Further, the single charge air pre-cooler 3A is provided in the above-explained second to fourth embodiments, but plural charge air pre-coolers may be provided.

## Claims

1. An exhaust gas recirculation system comprising:
a turbo charger having a compressor wheel and a turbine wheel;
a high-pressure intake passage provided between the compressor wheel and an intake port of an internal combustion engine;
a charge air cooler provided on the high-pressure intake passage to cool intake gas;
a high-pressure exhaust passage provided between an exhaust port of the internal combustion engine and the turbine wheel;
an EGR passage branched from the high-pressure exhaust passage and connected to the high-pressure intake passage; and
an EGR cooler for cooling recirculated exhaust gas flowing through the EGR passage by coolant flowing through a coolant recirculation passage of the internal combustion engine, wherein
a downstream end of the EGR passage is connected to the high-pressure intake passage at an upstream of the charge air cooler.

2. The exhaust gas recirculation system according to claim 1, wherein
the charge air cooler is configured to cool intake gas by coolant flowing through a coolant recirculation sub-passage other than the coolant recirculation passage.

3. The exhaust gas recirculation system according to claim 1. or 2, further comprising
a charge air pre-cooler provided on the high-pressure intake passage, wherein
the charge air pre-cooler is disposed at an upstream of the charge air cooler.

4. The exhaust gas recirculation system according to claim 3, wherein
the charge air pre-cooler is configured to cool intake gas by coolant flowing through the coolant recirculation passage.

5. The exhaust gas recirculation system according to claim 3 or 4, wherein
the downstream end of the EGR passage is connected to the high-pressure intake passage at a downstream of the charge air pre-cooler.

6. The exhaust gas recirculation system according to claim 4 or 5, wherein
the coolant recirculation passage is configured to include a flow path for recirculating coolant sequentially through a radiator, the internal combustion engine, the EGR cooler and the internal combustion engine again, and a flow path for recirculating coolant sequentially through the radiator, the charge air pre-cooler and the internal combustion engine.

7. The exhaust gas recirculation system according to claim 4 or 5, wherein
the coolant recirculation passage is configured to recirculate coolant sequentially through a radiator, the internal combustion engine, the EGR cooler, the charge air pre-cooler and the internal combustion engine again.
